(19) Europäisches Patentamt
European Patent Office
Office européen des brevets

(11) EP 3 943 542 A1

(12) **EUROPEAN PATENT APPLICATION**
published in accordance with Art. 153(4) EPC

(43) Date of publication:
**26.01.2022 Bulletin 2022/04**

(21) Application number: **20779568.3**

(22) Date of filing: **18.03.2020**

(51) International Patent Classification (IPC):
***C08K 5/29*** (2006.01) ***C08L 27/16*** (2006.01)
***H01M 4/13*** (2010.01) ***H01M 4/139*** (2010.01)
***H01M 4/62*** (2006.01)

(52) Cooperative Patent Classification (CPC):
**C08K 5/29; C08L 27/16; H01M 4/13; H01M 4/139; H01M 4/62;** Y02E 60/10

(86) International application number:
**PCT/JP2020/011957**

(87) International publication number:
**WO 2020/196148 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2019 JP 2019055430**

(71) Applicant: **Kureha Corporation**
**Chuo-ku**
**Tokyo 103-8552 (JP)**

(72) Inventors:
- **OKADA, Kayoko**
  **Tokyo 103-8552 (JP)**
- **KOBAYASHI, Shota**
  **Tokyo 103-8552 (JP)**
- **KATONO, Masataka**
  **Tokyo 103-8552 (JP)**

(74) Representative: **Leidescher, Thomas**
**Zimmermann & Partner**
**Patentanwälte mbB**
**Josephspitalstraße 15**
**80331 München (DE)**

# (54) COMPOSITION FOR ELECTRODE MIX, ELECTRODE MIX, ELECTRODE, NON-AQUEOUS ELECTROLYTE SECONDARY BATTERY, AND METHOD FOR PRODUCING ELECTRODE

(57) Provided is a composition for an electrode mixture that can enhance adhesive strength between a current collector and an electrode mixture layer in a battery, such as a lithium-ion secondary battery. The composition for an electrode mixture according to an embodiment of the present invention contains a synthetic resin containing a vinylidene fluoride polymer in a proportion of 99 mass% or greater, and a polyisocyanate compound, in which at least some isocyanate groups are blocked by a blocking agent.

EP 3 943 542 A1

## Description

### [TECHNICAL FIELD]

The present invention relates to a composition for an electrode mixture, an electrode mixture and use thereof. More specifically, the present invention relates to a composition for an electrode mixture, an electrode mixture, an electrode, a non-aqueous electrolyte secondary battery, and a method for producing an electrode.

### [BACKGROUND ART]

In recent years, there have been remarkable developments in electronic technology, and the functionality of small portable devices has become increasingly advanced. Therefore, there is a demand for the power supplies used in these devices to be smaller and lighter (i.e., higher energy density). As batteries having high energy density, non-aqueous electrolyte secondary batteries such as lithium-ion secondary batteries are widely used.

Furthermore, from the perspective of global environmental issues and energy conservation, non-aqueous electrolyte secondary batteries are also used in, for example, hybrid electric vehicles combining a secondary battery and an engine and electric vehicles having a secondary battery as a power supply, and applications thereof are expanding.

An electrode for a non-aqueous electrolyte secondary battery has a structure including a current collector and an electrode mixture layer formed on the current collector. The electrode mixture layer is formed by applying an electrode mixture typically containing an electrode active material, a conductive auxiliary, and a composition for an electrode mixture (binder composition) in a slurry form in which the electrode mixture is dispersed in an appropriate solvent or dispersion medium and volatilizing the solvent or the dispersion medium. As the binder composition, a vinylidene fluoride polymer composition such as polyvinylidene fluoride (PVDF) has been mainly used because of exhibiting chemical resistance, excellent weatherability, and excellent electrochemical stability.

For example, Patent Document 1 describes an electrode binder for a lithium-ion secondary battery, the electrode binder containing a vinylidene fluoride polymer dispersed in an organic diluent and a (meth)acrylic polymer dispersant.

However, the vinylidene fluoride polymer exhibits low adhesive strength to, for example, a metal foil which is a current collector of a battery and an active material, and enhancement of the adhesive strength has been demanded.

Furthermore, as a positive electrode active material (electrode active material), lithium cobaltate has been mainly used; however, in recent years, depending on the application, for example, lithium-nickel composite oxides and lithium iron phosphate have also been used as positive electrode active materials. In a case where a lithium-nickel composite oxide is used as a positive electrode active material, use of a vinylidene fluoride polymer as a binder composition tends to cause thickening of the electrode mixture during storage. In some cases, gelling may occur, and enhancement of stability of the electrode mixture has been demanded.

Therefore, as a method for improving adhesion of the vinylidene fluoride polymer to a metal foil or the like, there is disclosure of a vinylidene fluoride copolymer obtained by copolymerizing a vinylidene fluoride and a monoester of unsaturated dibasic acid such as monomethyl maleate (e.g., see Patent Documents 2 and 3) and a vinylidene fluoride copolymer obtained by copolymerizing vinylidene fluoride and an acrylic acid-based compound (e.g., see Patent Document 4).

Furthermore, as a method to prevent gelling of the electrode mixture, there is disclosure of a copolymer containing vinylidene fluoride and chlorotrifluoroethylene (e.g., see Patent Document 5).

[Citation List]

[Patent Document]

Patent Document 1: JP 2017-510044 A
Patent Document 2: JP 2001-019896 A
Patent Document 3: JP 06-172452 A
Patent Document 4: JP 2010-525124 T
Patent Document 5: JP 11-195419A

## [SUMMARY OF INVENTION]

[Technical Problem]

However, even with polymers described in Patent Documents 2 to 4, adhesiveness to metal foils or the like is not sufficient yet. Furthermore, as described in Patent Document 5, when an electrode mixture is produced by using a vinylidene fluoride polymer and a positive electrode active material, if the electrode mixture is produced by using a high-nickel positive electrode active material having a high content of nickel as the positive electrode active material, a problem of reduction in adhesiveness occurs although gelling can be suppressed.
The present invention is completed in light of the problems of technologies in the related art described above, and an object of the present invention is to provide a binder composition having superior adhesiveness to metal foils or the like, compared to vinylidene fluoride polymers in the related art.

[Solution to Problem]

As a result of diligent research to solve the problems described above, the inventors of the present invention completed the present invention based on the finding that, surprisingly, use of an electrode mixture containing a vinylidene fluoride polymer and a polyisocyanate compound can enhance adhesive strength between a current collector and an electrode mixture layer.
That is, the composition for an electrode mixture according to one aspect of the present invention is a composition for an electrode mixture, the composition containing a synthetic resin containing a vinylidene fluoride polymer in a proportion of 99 mass% or greater, and a polyisocyanate compound, in which at least some isocyanate groups are blocked by a blocking agent.

[Advantageous Effects of Invention]

According to one aspect of the present invention, a composition for an electrode mixture that can enhance adhesive strength between a current collector and an electrode mixture layer in a battery, such as a lithium-ion secondary battery, can be provided.

## [DESCRIPTION OF EMBODIMENTS]

[Composition for Electrode Mixture]

The composition for an electrode mixture according to the present embodiment contains a synthetic resin and a polyisocyanate compound.

Synthetic Resin

The synthetic resin is only required to contain a vinylidene fluoride polymer in a proportion of 99 mass% or greater. In one aspect, the synthetic resin only contains a vinylidene fluoride polymer. In a case where the synthetic resin contains another polymer, there is no particular restriction as long as the desired effect of the composition for an electrode mixture of the present embodiment is not impaired. One aspect of the synthetic resin may be a synthetic resin containing no (meth)acrylic polymers as the other polymers. By allowing the vinylidene fluoride polymer to be contained in the proportion of 99 mass% or greater, adhesive strength between a current collector and an electrode mixture layer can be enhanced in a case where the composition for an electrode mixture according to the present embodiment is used. Furthermore, containing the vinylidene fluoride polymer in the proportion of 99 mass% or greater is also preferred from the perspective of electrochemical stability.

Vinylidene Fluoride Polymer

In the present specification, "vinylidene fluoride polymer" includes both a homopolymer of vinylidene fluoride, and a copolymer of vinylidene fluoride and a monomer copolymerizable with vinylidene fluoride. The monomer copolymerizable with vinylidene fluoride can be appropriately selected from, for example, known monomers. In a case where vinylidene fluoride is copolymerized, 50 mol% or greater of the vinylidene fluoride units are preferably contained, 80 mol% or greater of the vinylidene fluoride units are more preferably contained, and 90 mol% or greater of the vinylidene fluoride units are particularly preferably contained.
In a case where the vinylidene fluoride polymer is a copolymer, a vinylidene fluoride copolymer containing

vinylidene fluoride as a main component and containing at least one structural unit selected from the group consisting of structural units derived from unsaturated dibasic acid, structural units derived from an unsaturated dibasic acid monoester, structural units derived from a halogenated alkyl vinyl compound, structural units derived from a compound represented by Formula (1) below, structural units derived from a compound represented by Formula (2) below, and structural units derived from a compound represented by Formula (3) below is preferred.

[Chem. 1]

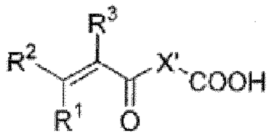

・・・(1)

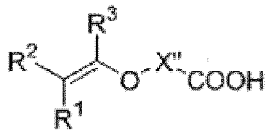

・・・(2)

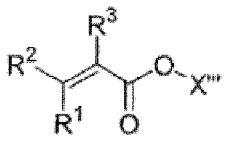

・・・(3)

Examples of the unsaturated dibasic acid according to the present embodiment include fumaric acid, maleic acid, citraconic acid, and phthalic acid.

Examples of the unsaturated dibasic acid monoester according to the present embodiment include monomethyl fumarate, monoethyl fumarate, monomethyl maleate, monoethyl maleate, monomethyl citraconate, monoethyl citraconate, monomethyl phthalate, and monoethyl phthalate.

In the compound represented by Formula (1) above according to the present embodiment, in Formula (1), $R^1$, $R^2$, and $R^3$ are each independently a hydrogen atom, a fluorine atom, a chlorine atom, or an alkyl group having from 1 to 5 carbons.

Examples of the alkyl group having from 1 to 5 carbons include a methyl group, an ethyl group, a propyl group, and an isopropyl group. In the present embodiment, $R^1$ is preferably a hydrogen atom or a methyl group, and more preferably a hydrogen atom. Furthermore, $R^2$ is preferably a hydrogen atom or a methyl group, and more preferably a hydrogen atom. Furthermore, $R^3$ is preferably a hydrogen atom, a fluorine atom, or a methyl group, and more preferably a hydrogen atom.

In Formula (1), the main chain constituting X' has from 1 to 19 atoms, preferably from 1 to 14 atoms, and more preferably from 1 to 9 atoms. Examples of the atom constituting such a main chain include a carbon atom and heteroatoms. In a case where a heteroatom is contained, the heteroatom is preferably an oxygen atom. Note that the number of the hydrogen atom is not included in the number of atoms in the main chain in the specification. Furthermore, the number of atoms in the main chain means the number of atoms of a backbone moiety in a chain in which a carboxyl group described in the right of X' and a group described in the left of X' ($R^1$ $R^2C=CR^3$-CO-) are connected via a minimum number of atoms.

In Formula (1), the molecular weight of the atomic group of X' is 472 or less, and preferably 172 or less. Although the lower limit of the molecular weight in a case of the atomic group is not particularly limited, it is typically approximately 14.

Specific examples of the compound represented by Formula (1) according to the present embodiment include acryloyloxypropylsuccinic acid, acryloyloxyethylsuccinic acid, methacryloyloxyethylsuccinic acid, methacryloyloxypropylsuccinic acid, 2-carboxyethyl acrylate, 2-carboxyethyl methacrylate, acryloyloxyethylphthalic acid, methacryloyloxyethylphthalic acid, N-carboxyethyl(meth)acrylamide, and carboxyethylthio(meth)acrylate. Among these, acryloyloxypropylsuccinic acid and acryloyloxyethylsuccinic acid are preferred.

In the compound represented by Formula (2) above according to the present embodiment, in Formula (2), $R^1$, $R^2$, and $R^3$ are each independently a hydrogen atom, a fluorine atom, a chlorine atom, or an alkyl group having from 1 to 5 carbons. The preferred aspects are identical to those of $R^1$, $R^2$, and $R^3$ in Formula (1).

In Formula (2), the main chain constituting X" is only required to have from 1 to 19 atoms, but the main chain constituting X" preferably has from 1 to 14 atoms, more preferably has from 1 to 9 atoms, and even more preferably has

from 2 to 6 atoms. Examples of the atom constituting the main chain include a carbon atom and heteroatoms. In a case where a heteroatom is contained, the heteroatom is preferably an oxygen atom. Note that the number of the hydrogen atom is not included in the number of atoms in the main chain. Furthermore, the number of atoms in the main chain means, in Formula (2), the number of atoms of a backbone moiety in a chain in which a carboxyl group described in the right of X" and a group described in the left of X" ($R^1 R^2C=CR^3$-O-) are connected via a minimum number of atoms.

In Formula (2), the molecular weight of the atomic group X" is only required to be 484 or less, but the molecular wight is preferably 184 or less, and more preferably 156 or less. Although the lower limit of the molecular weight in a case of the atomic group is not particularly limited, it is normally approximately 14. X" is preferably an atomic group in which a main chain is formed from 2 to 6 atoms and which has a molecular weight of 156 or less.

Specific examples of the compound represented by Formula (2) according to the present embodiment include vinyl carboxymethyl ether and vinyl carboxyethyl ether.

In the compound represented by Formula (3) above according to the present embodiment, in Formula (3), $R^1$, $R^2$, and $R^3$ are each independently a hydrogen atom, a fluorine atom, a chlorine atom, or an alkyl group having from 1 to 5 carbons. The preferred aspects are identical to those of $R^1$, $R^2$, and $R^3$ in Formula (1).

In Formula (3), X‴ is a hydrogen atom or a hydrocarbon moiety having at least one hydroxyl group and having from 1 to 5 carbons. Examples of the hydrocarbon moiety having a hydroxyl group and having from 1 to 5 carbons includes a hydroxyethyl group and a hydroxypropyl group.

Specific example of the compound represented by Formula (3) include acrylic acid, methacrylic acid, 2-hydroxyethyl acrylate, 2-hydroxypropyl acrylate, 2-hydroxyethylmethyl acrylate, and 2-hydroxypropyl methacrylate. Among these, 2-hydroxyethyl acrylate and acrylic acid are preferred.

Furthermore, examples of such other monomer described above include halogenated alkyl vinyl compounds that are copolymerizable with vinylidene fluoride, fluorine-based monomers or hydrocarbon-based monomers such as ethylene or propylene, (poly)alkylene glycol dimethacrylate, (poly)alkylene glycol diacrylate, and polyvinyl benzene.

Example of the halogenated alkyl vinyl compound includes fluorinated alkyl vinyl compounds. Specific examples include hexafluoropropylene (HFP), chlorotrifluoroethylene (CTFE), trifluoroethylene (TFE), tetrafluoroethylene, hexafluoroethylene, and fluoroalkyl vinyl ethers. Among them, hexafluoropropylene and chlorotrifluoroethylene are preferred. Furthermore, one type of these other monomers may be used alone, or two or more types may be used.

Example of Vinylidene Fluoride Polymer

As the vinylidene fluoride polymer, a commercially available product can be used. Examples thereof include KF #7300, KF #9100, KF #9700, and KF #7500, available from Kureha Corporation.

Inherent Viscosity ($\eta_i$) of Vinylidene Fluoride Polymer

The inherent viscosity of the vinylidene fluoride polymer used in the present embodiment is not particularly limited but is preferably from 0.5 to 5.0 dL/g, more preferably 1.0 dL/g or greater and 4.5 dL/g or less, and even more preferably 1.5 dL/g or greater and 4.0 dL/g or less.

The inherent viscosity ($\eta_i$) can be determined by the following equation based on the viscosity ($\eta$) at 30°C of a solution obtained by dissolving a vinylidene fluoride polymer (A) in n-methylpyrrolidone (NMP), the viscosity ($\eta_0$) at 30°C of the NMP, and the concentration (C) of the vinylidene fluoride polymer (A) in the solution.

$$\eta_i = (1/C) \cdot \ln(\eta/\eta_0)$$

Polymerization Method of Vinylidene Fluoride Polymer

The polymerization method of vinylidene fluoride polymer is not particularly limited, and a known polymerization method can be used. Examples of the polymerization method include suspension polymerization, emulsion polymerization, and solution polymerization. Among these, from the perspective of ease in post-processing, suspension polymerization in an aqueous system and emulsion polymerization are preferred, and suspension polymerization in an aqueous system is particularly preferred.

Polyisocyanate Compound

In the polyisocyanate compound contained in the composition for an electrode mixture of the present embodiment, at least some isocyanate groups are blocked by a blocking agent. That is, the polyisocyanate compound contains at least one blocked isocyanate group. In the present specification, "blocked isocyanate group" refers to an isocyanate

group that has been blocked (stabilized) by a blocking agent.

In the blocked isocyanate group, a blocking agent undergoes dissociation (deblocking) by heating, and isocyanate group is regenerated. From the perspective of enhancement of adhesive strength between a current collector and the electrode mixture layer, 60% or greater of all isocyanate groups are preferably blocked by the blocking agent, 80% or greater of all isocyanate groups are more preferably blocked by the blocking agent, and all isocyanate groups of the polyisocyanate compound are particularly preferably blocked by the blocking agent.

The polyisocyanate compound contained in the composition for an electrode mixture of the present embodiment is a multimer of at least one diisocyanate selected from the group consisting of aliphatic diisocyanate, alicyclic diisocyanate, and aromatic diisocyanate, and at least some isocyanate groups are blocked (stabilized) by the blocking agent.

Examples of the aliphatic diisocyanate compound include butane diisocyanate, pentane diisocyanate, hexamethylene diisocyanate (HDI), trimethylhexamethylene diisocyanate, and lysine diisocyanate.

Examples of the alicyclic diisocyanate compound include isophorone diisocyanate (IPDI), hydrogenated xylylene diisocyanate, hydrogenated diphenylmethane diisocyanate, and 1,4-cyclohexane diisocyanate.

Examples of the aromatic diisocyanate include xylylene diisocyanate (XDI), diphenylmethane diisocyanate (MDI), and tolylene diisocyanate (TDI).

One type of the diisocyanate may be used alone, or two or more types of these diisocyanates may be used in combination.

Among these, an aliphatic diisocyanate and an alicyclic diisocyanate are preferred, and from the perspectives of weatherability and easy industrial availability, hexamethylene diisocyanate and isophorone diisocyanate are preferred, and hexamethylene diisocyanate is more preferred.

Examples of the polyisocyanate derived from diisocyanate include polyisocyanates having at least one bond selected from the group consisting of an isocyanurate bond, a biuret bond, a urethane bond, a uretdione bond, a urea bond, an allophanate bond, an oxadiazinetrione bond, and an iminooxadiazinedione bond. From the perspectives of weatherability and heat resistance, a polyisocyanate having an isocyanurate bond, a biuret bond, an urethane bond, or an allophanate bond is preferred. Furthermore, two or more of these bonds may be contained.

The number of isocyanate groups (including blocked isocyanate groups) in the polyisocyanate is preferably from 2 to 22, and more preferably from 3 to 18.

One type of the polyisocyanate may be used alone, or two or more types of the polyisocyanates may be used in combination.

Examples of the blocking agent include oxime compounds, active methylene compounds, pyrazole compounds, alcohol compounds, alkylphenol compounds, phenol compounds, mercaptan compounds, acid amide compounds, acid imide compounds, imidazole compounds, urea compounds, and amine compounds.

Examples of the oxime compound include formaldoxime, acetaldoxime, acetoxime, methyl ethyl ketoxime (MEK oxime), methyl isobutyl ketoxime (MIBK oxime), dimethyl ketoxime, diethyl ketoxime, and cyclohexanone oxime.

Examples of the active methylene compound include dimethyl malonate, diethyl malonate, ethyl isobutanoyl acetate, methyl acetoacetate, ethyl acetoacetate, and acetylacetone.

Examples of the pyrazole compound include 3,5-dimethylpyrazole, pyrazole, and 3-methylpyrazole.

Examples of the alcohol compound include methanol, ethanol, 2-propanol, n-butanol, sec-butanol, 2-ethyl-1-hexanol, 2-methoxyethanol, 2-ethoxyethanol, and 2-butoxyethanol.

Examples of the alkylphenol compound include monoalkylphenols and dialkylphenols, which have an alkyl group having 4 or more carbons as a substituent.

Examples of the phenol compound include phenol, cresol, ethylphenol, styrenated phenol, and hydroxybenzoate.

Examples of the mercaptan compound include butyl mercaptan and dodecyl mercaptan.

Examples of the acid amide compound include acetanilide, amide acetate, ε-caproiactam, δ-valerolactam, and γ-butyrolactam.

Examples of the acid imide compound include succinimide and maleimide.

Examples of the imidazole compound include imidazole and 2-methylimidazole.

Examples of the urea compound include urea, thiourea, and ethylene urea.

Examples of the amine compound include diphenylamine, aniline, carbazole, di-n-propylamine, diisopropylamine, and isopropylethylamine.

The isocyanate group of the polyisocyanate compound may be blocked by one type of blocking agent or may be blocked by two or more types of blocking agents.

In the polyisocyanate in which isocyanate groups are blocked by a blocking agent, a blocking agent undergoes dissociation (deblocking) by heating, and isocyanate group is regenerated. After the mixture for an electrode is applied on a current collector foil, the blocking agent is preferably subjected to dissociation at, for example, a heating temperature of heat-drying for drying, or heat-treating after the heat-drying. From such perspective, the blocking agent is preferably an oxime compound, an active methylene compound, or a pyrazole compound. Among these, methyl ethyl ketoxime,

dimethyl malonate, diethyl malonate, methyl acetoacetate, ethyl acetoacetate, 3,5-dimethylpyrazole, and pyrazole are preferred. In particular, when an oxime compound is used as the blocking agent, thickening of the electrode mixture can be suppressed while adhesive strength between a current collector and the electrode mixture layer is enhanced.

As the polyisocyanate compound, in which at least some isocyanate groups are blocked by a blocking agent, a commercially available product can be used. Examples thereof include DURANATE TPA-B80E (oxime derivative-blocked polyisocyanate of 1,6-hexamethylene diisocyanate), SBN-70D (pyrazole derivative-blocked isocyanate of 1,6-hexamethylene diisocyanate), and MF-K60B (active methylene derivative-blocked isocyanate of 1,6-hexamethylene diisocyanate) (all available from Asahi Kasei Chemicals Corporation).

Mass Ratio of Polyisocyanate Compound to Synthetic Resin

In the composition for an electrode mixture of the present embodiment, the content of the polyisocyanate compound per 100 parts by mass of the synthetic resin is preferably from 0.5 to 50 parts by mass, and more preferably from 2 to 40 parts by mass. When the mass ratio of the polyisocyanate compound to the synthetic resin is in the range described above, adhesive strength between a current collector and the electrode mixture layer can be enhanced. From the perspective of enhancing adhesive strength, inherent viscosity of the synthetic resin is preferably high in the preferred viscosity range of the synthetic resin.

The form of the composition for an electrode mixture of the present embodiment is not particularly limited and may be powder or liquid. Furthermore, the composition for an electrode mixture may contain a solvent. The solvent may be a non-aqueous solvent or may be water. Examples of the non-aqueous solvent include N-methylpyrrolidone, N,N-dimethylformamide, N,N-dimethylacetamide, dimethylsulfoxide, hexamethylphosphoramide, dioxane, tetrahydrofuran, tetramethylurea, triethylphosphate, trimethylphosphate, acetone, ethyl acetate, n-butyl acetate, n-butanol, dipropylene glycol monomethyl ether, propylene glycol monomethyl ether acetate, and cyclohexanone. Two or more types of these solvents may be mixed and used.

Electrode mixture

The electrode mixture of the present embodiment contains the composition for an electrode mixture described above and an active material. The electrode mixture may contain a conductive auxiliary, a non-aqueous solvent, a pigment dispersant, and a dispersion stabilizer.

The electrode mixture can be an electrode mixture for a positive electrode or an electrode mixture for a negative electrode by changing the type of active material or the like depending on the type of current collector to be coated. Because the vinylidene fluoride polymer typically has excellent oxidation resistance, the electrode mixture of the present embodiment can be suitably used as the electrode mixture for a positive electrode. Furthermore, because the vinylidene fluoride polymer typically has excellent reduction resistance, the electrode mixture of the present embodiment can be suitably used as the electrode mixture for a negative electrode.

Active Material

Lithium composite metal oxides are typically used as the positive electrode active material.

Examples of the lithium composite metal oxide include $LiMnO_2$, $LiMn_2O_4$, $LiCoO_2$, $LiNiO_2$, $LiNi_xCo_{1-x}O_2$ ($0 < x < 1$), $LiNi_xCo_yMn_{1-x-y}O_2$ ($0 < x < 1$, $0 < y < 1$), $LiNi_xCo_yAlzO_2$ ($0.55 \leq x < 1$, $0 < y2 < 0.55$, $0 < z < 0.55$, and $x/(x + y + z) \geq 0.55$), and $LiFePO_4$. Specific examples of the lithium composite metal oxide include $Li_{1.00}Ni_{0.5}Co_{0.2}Mn_{0.3}O_2$ (NCM523), $Li_{1.00}Ni_{0.6}Co_{0.2}Mn_{0.2}O_2$ (NCM622), $Li_{1.00}Ni_{0.83}Co_{0.12}Mn_{0.05}O_2$ (NCM811), and $Li_{1.00}Ni_{0.85}Co_{0.15}Al_{0.05}O_2$ (NCA811).

As the negative electrode active material, a known material such as carbon materials, metal/alloy materials, and metal oxides can be used. Among these, from the perspective of further enhancing the energy density of the battery, carbon materials are preferred. Examples of the carbon material include artificial graphite, natural graphite, non-graphitizable carbon, and graphitizable carbon.

In the electrode mixture, preferably from 0.2 to 15 parts by mass, and more preferably from 0.5 to 10 parts by mass, of the vinylidene fluoride polymer is contained per 100 parts by mass of the active material.

Conductive auxiliary

A conductive auxiliary may be added for the purpose of enhancing the conductivity of the electrode mixture layer in a case of using an active material having low electrical conductivity such as $LiCoO_2$. Examples of the conductive auxiliary that can be used include carbonaceous materials such as carbon black, carbon nanotubes, graphite fine powder, and graphite fiber; and metal fine powder or metal fiber such as nickel and aluminum.

Non-aqueous Solvent

As the non-aqueous solvent, a non-aqueous solvent exemplified as the non-aqueous solvents that may be contained in the composition for an electrode mixture described above can be used. Examples thereof include N-methylpyrrolidone (NMP). Furthermore, one type of non-aqueous solvent may be used alone, or two or more types may be mixed.

Other Components of Electrode Mixture

The electrode mixture of the present embodiment may contain another component besides the components described above. Examples of such another component include pigment dispersants such as polyvinylpyrrolidone.

Preparation of electrode mixture

The electrode mixture according to the present embodiment is, for example, only required to be obtained by mixing the composition for an electrode mixture containing a synthetic resin and a polyisocyanate compound, with an active material, to form a homogeneous slurry, and the order at the time of mixing is not particularly limited. Furthermore, in a case where a composition for an electrode mixture containing a solvent is used as the composition for an electrode mixture, before the solvent is added to the composition for an electrode mixture, an electrode active material and the like may be added. For example, the electrode mixture may be obtained by adding an electrode active material to the composition for an electrode mixture, then adding a solvent, and agitating and mixing. Furthermore, the electrode mixture may be obtained by dispersing an electrode active material in a solvent, adding the composition for an electrode mixture thereto, and agitating and mixing. Alternatively, the electrode mixture may be obtained by adding an electrode active material to a composition for an electrode mixture containing a solvent as the composition for an electrode mixture, and agitating and mixing.

Furthermore, the preparation can be also performed by mixing a synthetic resin after the polyisocyanate compound and the active material are mixed.

Electrode

An electrode according to the present embodiment has an electrode mixture layer formed from the electrode mixture described above on a current collector. "Electrode" as used in the present specification refers to an electrode of a battery in which an electrode mixture layer formed from the electrode mixture of the present embodiment is formed on a current collector, unless otherwise specified.

Current Collector

The current collector is a base material of the electrode and is a terminal for outputting electricity. Examples of materials for the current collector include iron, stainless steel, steel, copper, aluminum, nickel, and titanium. The shape of the current collector is preferably a foil or a mesh. In the case where the electrode is positive, the current collector is preferably an aluminum foil. The thickness of the current collector is preferably from 1 μm to 100 μm, and more preferably from 3 to 20 μm.

Electrode Mixture Layer

The electrode mixture layer is a layer obtained by applying the aforementioned electrode mixture to the current collector, and drying it. A known method in the technical field can be used as the method for applying the electrode mixture, and examples thereof include methods that use a bar coater, a die coater, or a comma coater. The drying temperature for forming the electrode mixture layer is preferably from 50°C to 200°C, and more preferably from 80°C to 180°C. The electrode mixture layer may be formed on both surfaces or only on either surface of the current collector.

The thickness of the electrode mixture layer is typically from 20 to 600 μm per side, and preferably from 20 to 350 μm per side. The electrode mixture layer may also be pressed to increase the density. Furthermore, the basis weight of the electrode mixture layer is typically from 20 to 700 $g/m^2$, and preferably from 30 to 500 $g/m^2$.

As described above, when an electrode mixture for a positive electrode is used to obtain an electrode mixture layer, the electrode is a positive electrode, and when an electrode mixture for a negative electrode is used to obtain an electrode mixture layer, the electrode is a negative electrode. The electrode according to the present embodiment can be used, for example, as a positive electrode of a non-aqueous electrolyte secondary battery such as a lithium-ion secondary battery. Alternatively, the electrode according to the present embodiment can be used, for example, as a

negative electrode of a non-aqueous electrolyte secondary battery such as a lithium-ion secondary battery.

Method for Producing Electrode

An example of a method for producing an electrode will be described in detail below, but the method for producing the electrode according to the present embodiment is not limited to the following method.

Method for Producing Electrode by One-step Heating

The method for producing the electrode according to the present embodiment include applying the electrode mixture on a current collector, and heat-drying the current collector after the applying step at a temperature of 80°C or higher.

Applying step

In the applying step, the electrode mixture is applied to the current collector. A known method in the technical field can be used as the method for applying the electrode mixture, and examples thereof include methods that use a bar coater, a die coater, or a comma coater.

Heat-drying

In the heat-drying, the current collector after the applying step is heated and dried at a temperature of 80°C or higher, and preferably heated and dried at a temperature of 110°C or higher. By heating and drying in the temperature range described above, the blocking agent can be dissociated from the blocked isocyanate group. Furthermore, the temperature of the electrode mixture applied on the current collector is preferably at a temperature of 80°C or higher.

Because the temperature at which the blocking agent is dissociated and thermal stability of the blocked isocyanate group vary depending on the type of the blocking agent, the heat-drying temperature may be appropriately selected based on the type of the blocking agent. For example, in a case where the blocking agent that blocks isocyanate groups is an oxime compound, heat-drying is more preferably performed at 110 to 180°C. Furthermore, in a case where the blocking agent that blocks isocyanate groups is an active methylene compound, heat-drying is more preferably performed at 80 to 150°C. Furthermore, in a case where the blocking agent that blocks isocyanate groups is a pyrazole compound, heat-drying is more preferably performed at 80 to 180°C.

The heat-drying time is not particularly limited but is preferably from 1 to 300 minutes, and can be appropriately selected based on the heating temperature.

Method for Producing Electrode by Multi-step Heating

Furthermore, the method for producing an electrode according to the present embodiment may include applying the electrode mixture on a current collector, drying the current collector after the applying step under heating at a temperature of 110°C or lower, and heat-treating the current collector after the drying at a temperature that is higher than the temperature of the drying and that is 110°C or higher. The applying step is identical to the applying step described above (method for producing electrode by one-step heating).

Drying

In the drying, the current collector after the applying step is heat-dried at a temperature of 110°C or lower. In the drying, heat-drying is preferably performed at a temperature that does not cause dissociation of most of the blocking agent from the blocked isocyanate groups and that can remove the solvent in the electrode mixture. Specifically, the heat-drying is preferably performed at a temperature of 110°C or lower, and the heat-drying is more preferably performed at a temperature of 100°C or lower. Furthermore, the temperature of the electrode mixture applied on the current collector is preferably at a temperature of 110°C or lower.

The drying time is not particularly limited but is preferably from 1 to 100 minutes.

Heat-treating

In the heat-treating, the current collector after the drying is heat-treated at a temperature that is higher than the temperature of the drying and that is 110°C or higher. By heat-treating in the temperature range described above, most of the blocking agent can be dissociated from the blocked isocyanate group. Furthermore, the temperature of the electrode

mixture applied on the current collector is preferably at a temperature of 110°C or higher.

Because the temperature at which the blocking agent is dissociated and thermal stability of the blocked isocyanate group vary depending on the type of the blocking agent, the heat-treating temperature may be appropriately selected based on the type of the blocking agent. For example, in a case where the blocking agent that blocks isocyanate groups is an oxime compound, heat-treating is more preferably performed at 120 to 180°C. Furthermore, in a case where the blocking agent that blocks isocyanate groups is an active methylene compound, heat-treating is preferably performed at 110 to 150°C. Furthermore, in a case where the blocking agent that blocks isocyanate groups is a pyrazole compound, heat-treating is preferably performed at 120 to 180°C.

The heat-treating time is not particularly limited but is preferably from 1 to 300 minutes, and can be appropriately selected based on the heating temperature.

For the electrode produced by the multi-step heating, the adhesive strength between the current collector and the electrode mixture layer can be enhanced compared to that of an electrode produced by one-step heating. The reason for this can be conceived as follows.

It is conceived that, by allowing the isocyanate group to bond with an OH group present in the active material and current collector (e.g., aluminum foil), adhesiveness in the interface between the active material and the vinylidene fluoride polymer and the interface between the current collector and the electrode mixture layer is enhanced. The isocyanate group tends to preferentially react with amine than an OH group. Therefore, when the blocking agent is dissociated from the blocked isocyanate group and the isocyanate groups are regenerated, if a large amount of amines contained in the dispersion medium and the like is present around the isocyanate group, the isocyanate group reacts with amine rather than the OH group present in the active material and the current collector. Thus, first, the amount of present amines is reduced by removing the dispersion medium in the electrode mixture layer by the heating of the first step. Then, it is conceived that, through dissociation of the blocking agent from the blocked isocyanate group by the heating of the second step, the regenerated isocyanate group is bonded to the OH group present in the active material and the current collector, and adhesiveness is enhanced. Note that the isocyanate group is likely to react with, in the order of, amine, an OH group, and a COOH group.

## Non-aqueous electrolyte secondary battery

The non-aqueous electrolyte secondary battery according to the present embodiment has the electrode described above. The other members of the non-aqueous electrolyte secondary battery are not particularly limited, and for example, usually used members can be used.

Example of the production method of the non-aqueous electrolyte secondary battery includes a method by overlaiding the negative electrode layer and the positive electrode via the separator, placing into a battery container, injecting the electrolyte solution in the battery container, and sealing the inlet of the battery container. In this production method, at least a part of the vinylidene fluoride polymer contained in the electrode mixture is melted and adhered to the separator by a heat press after the injection of the electrode liquid.

## [Summary]

The composition for an electrode mixture according to the present embodiment is a composition for an electrode mixture, the composition containing a synthetic resin containing a vinylidene fluoride polymer in a proportion of 99 mass% or greater, and a polyisocyanate compound, in which at least some isocyanate groups are blocked by a blocking agent.

Furthermore, in the composition for an electrode mixture according to the present embodiment, the polyisocyanate compound is preferably at least one compound selected from the group consisting of isocyanurate, biuret, and adduct derived from hexamethylene diisocyanate.

Furthermore, in the composition for an electrode mixture according to the present embodiment, the blocking agent is preferably at least one blocking agent selected from the group consisting of oxime compounds, active methylene compounds, and pyrazole compounds.

Furthermore, in the composition for an electrode mixture according to the present embodiment, the blocking agent is more preferably an oxime compound.

Furthermore, in the composition for an electrode mixture according to the present embodiment, the content of the polyisocyanate compound is preferably from 0.5 to 50 parts by mass per 100 parts by mass of the synthetic resin.

Furthermore, in the composition for an electrode mixture according to the present embodiment, the vinylidene fluoride polymer is preferably a homopolymer of vinylidene fluoride.

Furthermore, in the composition for an electrode mixture according to the present embodiment, the vinylidene fluoride polymer may be a vinylidene fluoride copolymer containing vinylidene fluoride as a main component and containing at least one structural unit selected from the group consisting of structural units derived from unsaturated dibasic acid, structural units derived from an unsaturated dibasic acid monoester, structural units derived from a halogenated

alkyl vinyl compound, structural units derived from a compound represented by Formula (1) below, structural units derived from a compound represented by Formula (2) below, and structural units derived from a compound represented by Formula (3) below.

[Chem. 2]

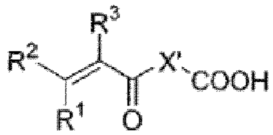

・・・(1)

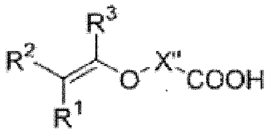

・・・(2)

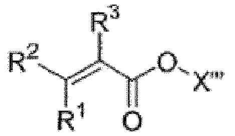

・・・(3)

In Formulas (1) to (3), $R^1$, $R^2$, and $R^3$ are each independently a hydrogen atom, a fluorine atom, a chlorine atom, or an alkyl group having from 1 to 5 carbons, in Formula (1), X' is an atomic group having a main chain formed from 1 to 19 atoms and having a molecular weight of 472 or less, in Formula (2), X" is an atomic group having a main chain formed from 1 to 19 atoms and having a molecular weight of 484 or less, and in Formula (3), X'" is hydrogen or a hydrocarbon moiety having at least one hydroxyl group and having from 1 to 5 carbons.

The electrode mixture according to the present embodiment contains the composition for an electrode mixture described above and an active material.

The electrode according to the present embodiment has an electrode mixture layer formed from the electrode mixture described above on a current collector.

The non-aqueous electrolyte secondary battery according to the present embodiment has the electrode described above.

The method for producing the electrode according to the present embodiment include applying the electrode mixture on a current collector, and heat-drying the current collector after the applying step at a temperature of 80°C or higher.

Furthermore, the method for producing an electrode according to the present embodiment includes applying the electrode mixture on a current collector, drying the current collector after the applying step under heating at a temperature of 110°C or lower, and heat-treating the current collector after the drying applying the electrode mixtureat a temperature that is higher than the temperature of the drying and that is 110°C or higher.

Examples are presented below to describe embodiments of the present invention in further detail. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all documents described in the present specification are incorporated by reference.

## [Examples]

Example 1: Preparation of Electrode Mixture

As a positive electrode active material, 100 parts by mass of $Li_{1.0}Ni_{0.5}Co_{0.2}Mn_{0.3}O_2$ (NCM523; average particle size: 11 $\mu$m) was used. As a conductive carbon black, 2 parts by mass of Super-P (available from Timcal Japan; average particle size: 40 nm; specific surface area: 60 $m^2/g$) was used. As the synthetic resin, 2 parts by mass of polyvinylidene fluoride (KF #9700, available from Kureha Corporation) was used. As the polyisocyanate compound, 0.38 parts by mass of polyisocyanate (DURANATE (trade name) TPA-B80E, available from Asahi Kasei Chemicals Corporation) was used.

A positive electrode mixture (electrode mixture) in a slurry form was prepared by dispersing the positive electrode active material, the conductive carbon black, the synthetic resin, and the polyisocyanate compound in NMP.

Example 2: Preparation of Electrode Mixture

An electrode mixture was prepared in the same manner as in Example 1 except for changing the amount of the polyisocyanate compound to 0.04 parts by mass.

Example 3: Preparation of Electrode Mixture

An electrode mixture was prepared in the same manner as in Example 1 except for changing the amount of the polyisocyanate compound to 0.16 parts by mass.

Example 4: Preparation of Electrode Mixture

An electrode mixture was prepared in the same manner as in Example 1 except for changing the amount of the polyisocyanate compound to 0.57 parts by mass.

Example 5: Preparation of Electrode Mixture

An electrode mixture was prepared in the same manner as in Example 1 except for changing the polyisocyanate compound to SBN-70D (available from Asahi Kasei Chemicals Corporation).

Example 6: Preparation of Electrode Mixture

An electrode mixture was prepared in the same manner as in Example 1 except for changing the polyisocyanate compound to MF-K60B (available from Asahi Kasei Chemicals Corporation).

Comparative Example 1: Preparation of Electrode Mixture

An electrode mixture was prepared in the same manner as in Example 1 except for changing the amount of the synthetic resin to 2.38 parts by mass and using no polyisocyanate compound.

Comparative Example 2: Preparation of Electrode Mixture

An electrode mixture was prepared in the same manner as in Example 1 except for changing the amount of the synthetic resin to 3 parts by mass and using no polyisocyanate compound.

Comparative Example 3: Preparation of Electrode Mixture

An electrode mixture was prepared in the same manner as in Example 1 except for changing the amount of the polyisocyanate compound to 2.04 parts by mass and using no synthetic resin.

Comparative Example 4: Preparation of Electrode Mixture

An electrode mixture was prepared in the same manner as in Comparative Example 3 except for changing the polyisocyanate compound to SBN-70D.

Comparative Example 5: Preparation of Electrode Mixture

An electrode mixture was prepared in the same manner as in Example 1 except for changing the polyisocyanate compound to isocyanate compound MOI-BP (available from Showa Denko K.K.).

Comparative Example 6: Preparation of Electrode Mixture

An electrode mixture was prepared in the same manner as in Example 1 except for changing the polyisocyanate compound to polyisocyanate compound 24A-100 in which isocyanate groups are not blocked (available from Asahi Kasei Corporation).

Example 7: Preparation of Electrode Mixture

An electrode mixture was prepared in the same manner as in Example 1 except for changing the synthetic resin to KF #7300 (available from Kureha Corporation).

Comparative Example 7: Preparation of Electrode Mixture

An electrode mixture was prepared in the same manner as in Comparative Example 1 except for changing the synthetic resin to KF #7300.

Example 8: Preparation of Electrode Mixture

An electrode mixture was prepared in the same manner as in Example 1 except for changing the synthetic resin to KF #9100 (available from Kureha Corporation).

Comparative Example 8: Preparation of Electrode Mixture

An electrode mixture was prepared in the same manner as in Comparative Example 1 except for changing the synthetic resin to KF #9100.

Example 9: Preparation of Electrode Mixture

An electrode mixture was prepared in the same manner as in Example 1 except for changing the synthetic resin to KF #7500 (available from Kureha Corporation).

Comparative Example 9: Preparation of Electrode Mixture

An electrode mixture was prepared in the same manner as in Comparative Example 1 except for changing the synthetic resin to KF #7500 (available from Kureha Corporation).

Example 10: Preparation of Electrode Mixture

An electrode mixture was prepared in the same manner as in Example 1 except for changing the positive electrode active material to $LiCoO_2$ (LCO CELLSEED C5H, available from Nippon Chemical Industrial Co., Ltd.; average particle size: 5 $\mu$m).

Comparative Example 10: Preparation of Electrode Mixture

An electrode mixture was prepared in the same manner as in Comparative Example 1 except for changing the positive electrode active material to LCO.

Example 11: Preparation of Electrode Mixture

An electrode mixture was prepared in the same manner as in Example 1 except for changing the positive electrode active material to $LiFePO_4$ (LFP; average particle size: 1.2 $\mu$m; specific surface area: 14.7 $m^2$/g).

Comparative Example 11: Preparation of Electrode Mixture

An electrode mixture was prepared in the same manner as in Comparative Example 1 except for changing the positive electrode active material to LFP.

Example 12: Preparation of Electrode Mixture

An electrode mixture was prepared in the same manner as in Example 1 except for changing the positive electrode active material to $Li_{1.0}Ni_{0.85}Co_{0.15}Al_{0.05}O_2$ (NCA811; average particle size: 14.7 $\mu$m; specific surface area: 0.17 $m^2$/g).

Example 13: Preparation of Electrode Mixture

An electrode mixture was prepared in the same manner as in Example 12 except for changing the polyisocyanate compound to SBN-70D.

Comparative Example 12: Preparation of Electrode Mixture

An electrode mixture was prepared in the same manner as in Comparative Example 1 except for changing the positive electrode active material to NCA.

Example 14: Preparation of Electrode Mixture

As the negative electrode active material, 95 parts by mass of natural graphite (BTR (trade name) 918, available from BTR New Energy Materials Inc.) was used. As the synthetic resin, 4.5 parts by mass of polyvinylidene fluoride (KF #9700, available from Kureha Corporation) was used. As the polyisocyanate compound, 0.5 parts by mass of polyisocyanate (DURANATE (trade name) TPA-B80E, available from Asahi Kasei Chemicals Corporation) was used. A negative electrode mixture (electrode mixture) in a slurry form was prepared by dispersing the negative electrode active material, the synthetic resin, and the polyisocyanate compound in NMP.

Comparative Example 13: Preparation of Electrode Mixture

An electrode mixture was prepared in the same manner as in Example 14 except for changing the amount of the synthetic resin to 5.0 parts by mass and using no polyisocyanate compound.

Example 15: Preparation of Electrode Mixture

An electrode mixture was prepared in the same manner as in Example 14 except for changing the synthetic resin to KF #7300 (available from Kureha Corporation).

Comparative Example 14: Preparation of Electrode Mixture

An electrode mixture was prepared in the same manner as in Comparative Example 13 except for changing the synthetic resin to KF #7300 (available from Kureha Corporation).

Evaluation Example 1: Measurement of Peel Strength

The positive electrode mixture obtained in each of Examples and Comparative Examples was applied on an aluminum foil having a thickness of 15 μm by using a bar coater, and heated and dried at 110°C for 30 minutes. Furthermore, heat treatment was performed at 130°C for 2 hours, and a one-side coated electrode with a one-side basis weight of 200 g/m$^2$ was prepared.

The one-side coated electrode was cut to a length of 50 mm and a width of 20 mm, and a 90 degree peel test was conducted in accordance with JIS K 6854-1 using a tensile tester (Universal Testing Instrument Model: STA-1150, available from Orientec Co., Ltd.) at a head speed of 10 mm/min to measure the peel strength (gf/mm). The measurement results of peel strength are shown in Table 1.

Evaluation Example 2: Measurement of Viscosity of Electrode Mixture

Slurry viscosities of the positive electrode mixtures obtained in Examples 12 and 13 and Comparative Example 12 were measured by a type-B viscometer (Digital Viscometer LV DV-E, available from Brookfield) with spindle No. 64. After 1 minute of preliminary agitation at 0.5 rpm, measurement was performed for 2 minutes at 1.0 rpm, 2 minutes for 6.0 rpm, and 2 minutes for 12 rpm. The value of viscosity after 2 minutes at 1.0 rpm was used as the slurry viscosity.

While the positive electrode mixture in the slurry form was stored at 25°C in a nitrogen atmosphere, the slurry viscosity was measured at given lengths of time (taking the start of storage as 0 hours, at 3 hours, 6 hours, 24 hours, 48 hours, and 72 hours). When the slurry viscosity exceeded 400000 mPa·s, the positive electrode mixture was considered to be gelled.

The case where gelling did not occur after 72 hours passed was evaluated as "◎" (thickening of the electrode mixture was sufficiently suppressed). The case where gelling did not occur until 48 hours was evaluated as "o" (thickening of the electrode mixture was suppressed). The case where gelling occurred within 24 hours was evaluated as "x"

(thickening of the electrode mixture was not suppressed). The viscosity measurement results are shown in Table 1.

Table 1

| | Active material | pVDF | | BPNCO | | Peel strength (gf/mm) | Thickening resistance |
|---|---|---|---|---|---|---|---|
| | | Grade | Added amount | Grade | Added amount | | |
| Example 1 | NCM | #9700 | 2 | SBN-70D | 0.38 | 14.2 | - |
| Example 2 | NCM | #9700 | 2 | SBN-70D | 0.04 | 8.4 | - |
| Example 3 | NCM | #9700 | 2 | - | 0.16 | 10.5 | - |
| Example 4 | NCM | #9700 | 2 | TPA-B80E | 0.57 | 15.8 | - |
| Example 5 | NCM | #9700 | 2 | SBN-70D | 0.38 | 13.0 | - |
| Example 6 | NCM | #9700 | 2 | MF-K60B | 0.38 | 12.7 | - |
| Comparative Example 1 | NCM | #9700 | 2.38 | - | - | 6.7 | - |
| Comparative Example 2 | NCM | #9700 | 3 | - | - | 7.9 | - |
| Comparative Example 3 | NCM | - | - | TPA-B80E | 2.04 | 1.1 | - |
| Comparative Example 4 | NCM | - | - | SBN-70D | 2.04 | 0.5 | - |
| Comparative Example 5 | NCM | #9700 | 2 | MOI-BO | 0.38 | 6.8 | - |
| Comparative Example 6 | NCM | #9700 | 2 | 24A-100 | 0.38 | 6.7 | - |
| Example 7 | NCM | #7300 | 2 | TPA-B80E | 0.38 | 7.2 | - |
| Comparative Example 7 | NCM | #7300 | 2.38 | - | - | 3.4 | - |
| Example 8 | NCM | #9100 | 2 | TPA-B80E | 0.38 | 5.1 | - |
| Comparative Example 8 | NCM | #9100 | 2.38 | - | - | 2.4 | - |
| Example 9 | NCM | #7500 | 2 | TPA-B80E | 0.38 | 5.2 | - |
| Comparative Example 9 | NCM | #7500 | 2.38 | - | - | 2.9 | - |
| Example 10 | LCO | #9700 | 2 | TPA-B80E | 0.38 | 3.8 | - |
| Comparative Example 10 | LCO | #9700 | 2.38 | - | - | 2.1 | - |

(continued)

| | Active material | pVDF | | BPNCO | | Peel strength (gf/mm) | Thickening resistance |
|---|---|---|---|---|---|---|---|
| | | Grade | Added amount | Grade | Added amount | | |
| Example 11 | LFP | #9700 | 2 | TPA-B80E | 0.38 | 1.5 | - |
| Comparative Example 11 | LFP | #9700 | 2.38 | - | - | 1.3 | - |
| Example 12 | NCA | #9700 | 2 | TPA-B80E | 0.38 | 14.4 | ◎ |
| Example 13 | NCA | #9700 | 2 | - | 0.38 | - | ○ |
| Comparative Example 12 | NCA | #9700 | 2.38 | - | - | 7.1 | x |

As shown in Table 1, when the electrode mixtures of Examples 1 to 13 were used, high peel strengths were exhibited. On the other hand, when the electrode mixtures of Comparative Examples 1, 2, and 7 to 12, which contained no polyisocyanate compound, were used, peel strengths were low. Also when the electrode mixtures of Comparative Examples 3 and 4, which contained no synthetic resin, were used, peel strengths were low.

Furthermore, when Example 1 and Comparative Examples 5 and 6 are compared, when the electrode mixture of Example 1 containing the polyisocyanate compound, in which at least some isocyanate groups were blocked isocyanate groups, was used, sufficiently high peel strength was exhibited. On the other hand, when the electrode mixture of Comparative Example 5, which contained the isocyanate compound that had a blocked isocyanate group but that was not a polyisocyanate compound, was used, peel strength was not sufficient. Furthermore, when the electrode mixture of Comparative Example 6, which contained the polyisocyanate compound containing unblocked isocyanate group, was used, peel strength was not sufficient. From these results, it was found that, by using a polyisocyanate compound in which at least some isocyanate groups were blocked isocyanate groups for an electrode mixture, adhesive strength between a current collector and an electrode mixture layer can be enhanced.

Furthermore, when Examples 12 and 13 and Comparative Example 12 are compared, thickening was suppressed for the electrode mixtures of Examples 12 and 13, which contained a polyisocyanate compound. In particular, thickening was sufficiently suppressed for the electrode mixture of Example 12 containing a polyisocyanate compound in which at least some isocyanate groups were blocked by oxime compounds. On the other hand, thickening was not suppressed for the electrode mixture of Comparative Example 12 which contained no polyisocyanate compound.

Evaluation Example 3: Examination of Peel Strength Based on Heat-Drying Temperature

An electrode mixture was prepared in the same manner as in Example 5 except for changing the amount of the synthetic resin to 1.68 parts by mass and changing the amount of the polyisocyanate compound to 0.32 parts by mass. Then, the peel strength was measured in the same manner as in Evaluation Example 1 except for setting the heat-drying temperature to 90°C and performing no heat-treating.

Evaluation Example 4: Examination of Peel Strength Based on Heat-Drying Temperature

The peel strength was measured in the same manner as in Evaluation Example 3 except for setting the heat-drying temperature to 100°C.

Evaluation Example 5: Examination of Peel Strength Based on Heat-Drying Temperature

An electrode mixture was prepared in the same manner as in Example 5 except for changing the amount of the synthetic resin to 2 parts by mass and using no polyisocyanate compound. Then, the peel strength was measured in the same manner as in Evaluation Example 3.

Evaluation Example 6: Examination of Peel Strength Based on Heat-Treating Temperature

An electrode mixture was prepared in the same manner as in Example 1 except for changing the amount of the synthetic resin to 1.68 parts by mass and changing the amount of the polyisocyanate compound to 0.32 parts by mass. Then, the peel strength was measured in the same manner as in Evaluation Example 1 except for setting the heat-drying temperature to 100°C.

Evaluation Example 7: Examination of Peel Strength Based on Heat-Treating Temperature

The peel strength was measured in the same manner as in Evaluation Example 6 except for setting the heat-drying temperature to 110°C.

Evaluation Example 8: Examination of Peel Strength Based on Heat-Treating Temperature

The peel strength was measured in the same manner as in Evaluation Example 6 except for setting the heat-drying temperature to 130°C.

Evaluation Example 9: Examination of Peel Strength Based on Heat-Treating Temperature

An electrode mixture was prepared in the same manner as in Example 1 except for changing the amount of the synthetic resin to 2 parts by mass and using no polyisocyanate compound. Then, the peel strength was measured in the same manner as in Evaluation Example 1.

The measurement results of the peel strength of Evaluation Examples 3 to 9 are shown in Table 2.

[Table 2]

| | Active material | pVDF | | BPNCO | | Heat-drying temperature (C°) | Heat-treating temperature (C°) | Peel strength (gf/mm) |
|---|---|---|---|---|---|---|---|---|
| | | Grade | Added amount | Grade | Added amount | | | |
| Evaluation Example 3 | NCM | #9700 | 1.68 | SBN-70D | 0.32 | 90 | - | 9.7 |
| Evaluation Example 4 | NCM | #9700 | 1.68 | SBN-70D | 0.32 | 100 | - | 10.4 |
| Evaluation Example 5 | NCM | #9700 | 2 | - | - | 90 | - | 4.3 |
| Evaluation Example 6 | NCM | #9700 | 1.68 | TPA-B80E | 0.32 | 100 | 130 | 11.3 |
| Evaluation Example 7 | NCM | #9700 | 1.68 | TPA-B80E | 0.32 | 110 | 130 | 10.7 |
| Evaluation Example 8 | NCM | #9700 | 1.68 | TPA-B80E | 0.32 | 130 | 130 | 9.7 |
| Evaluation Example 9 | NCM | #9700 | 2 | - | - | 110 | 130 | 4.4 |

As shown in Table 2, Evaluation Examples 3 and 4 exhibited high peel strengths, and Evaluation Example 5 in which the electrode mixture containing no polyisocyanate compound was used exhibited a low peel strength. Furthermore, when Evaluation Examples 3 and 4 are compared, the peel strength of Evaluation Example 4 in which the heat-drying temperature was 100°C exhibited the highest peel strength.

Furthermore, as shown in Table 2, Evaluation Examples 6 to 8 exhibited high peel strengths, and Evaluation Example 9 in which the electrode mixture containing no polyisocyanate compound was used exhibited a low peel strength. Furthermore, when Evaluation Examples 6 to 8 are compared, the peel strength of Evaluation Example 6 in which the heat-drying temperature was 100°C exhibited the highest peel strength.

The polyisocyanate compound used in Evaluation Examples 6 to 8 was a polyisocyanate compound in which at least some isocyanate groups are blocked by the blocking agent. When the polyisocyanate compound was heated

at approximately 130°C, the blocking agent was dissociated from the isocyanate groups, and the isocyanate groups were regenerated.

In Evaluation Example 8, it is conceived that, due to the heat-drying temperature set to 130°C, the blocking agent was dissociated from most of the blocked isocyanate group in the heat-drying. On the other hand, in Evaluation Examples 6 and 7 in which the heat-drying temperature was set to 110°C or lower, it is conceived that less dissociation of the blocking agent from the blocked isocyanate group occurred in the heat-drying, and the blocking agent was dissociated from most of the blocked isocyanate group in the heat-treating.

From the results of Evaluation Examples 6 to 9, it was found that adhesive strength between the current collector and the electrode mixture layer can be further enhanced by drying at a temperature that is not higher than the temperature causing little dissociation of the blocking agent from the blocked isocyanate group and then drying (heat-treating) at a temperature that is not lower than the temperature at which most of the blocking agent is dissociated from the blocked isocyanate group.

Evaluation Example 10: Measurement of Peel Strength

The negative electrode mixture obtained in each of Examples 14 and 15 and Comparative Examples 13 and 14 was applied on a copper foil having a thickness of 10 μm by using a bar coater, and heated and dried at 110°C for 30 minutes. Furthermore, heat treatment was performed at 130°C for 2 hours, and a one-side coated electrode with a one-side basis weight of 150 g/m$^2$ was prepared.

The one-side coated electrode was cut to a length of 50 mm and a width of 20 mm, and a 90 degree peel test was conducted in accordance with JIS K 6854-1 using a tensile tester (Universal Testing Instrument Model: STA-1150, available from Orientec Co., Ltd.) at a head speed of 10 mm/min to measure the peel strength (gf/mm). The measurement results of peel strength are shown in Table 3.

[Table 3]

| | Active material | pVDF | | BPNCO | | Peel strength (gf/mm) |
|---|---|---|---|---|---|---|
| | | Grade | Added amount | Grade | Added amount | |
| Example 14 | BTR918 | #9700 | 4.5 | TPA-B80E | 0.5 | 1.6 |
| Comparative Example 13 | BTR918 | #9700 | 5 | - | - | 1.4 |
| Example 15 | BTR918 | #7300 | 4.5 | TPA-B80E | 0.5 | 1.5 |
| Comparative Example 14 | BTR918 | #7300 | 5 | - | - | 1.1 |

[Industrial Applicability]

The present invention can be utilized as an electrode mixture to be applied on a current collector in the production of an electrode of a non-aqueous electrolyte secondary battery.

**Claims**

1. A composition for an electrode mixture, the composition comprising:

   a synthetic resin containing a vinylidene fluoride polymer in a proportion of 99 mass% or greater, and
   a polyisocyanate compound, in which at least some isocyanate groups are blocked by a blocking agent.

2. The composition for an electrode mixture according to claim 1, wherein the polyisocyanate compound is at least one compound selected from the group consisting of isocyanurate, biuret, and adduct derived from hexamethylene diisocyanate.

3. The composition for an electrode mixture according to claim 1 or 2, wherein the blocking agent is at least one blocking agent selected from the group consisting of oxime compounds, active methylene compounds, and pyrazole compounds.

4. The composition for an electrode mixture according to any one of claims 1 to 3, wherein the blocking agent is an oxime compound.

5. The composition for an electrode mixture according to any one of claims 1 to 4, wherein the composition for an electrode mixture has a content of the polyisocyanate compound from 0.5 to 50 parts by mass per 100 parts by mass of the synthetic resin.

6. The composition for an electrode mixture according to any one of claims 1 to 5, wherein the vinylidene fluoride polymer is a homopolymer of vinylidene fluoride.

7. The composition for an electrode mixture according to any one of claims 1 to 5, wherein

the vinylidene fluoride polymer contains vinylidene fluoride as a main component, and
the vinylidene fluoride polymer is a vinylidene fluoride copolymer containing at least one structural unit selected from the group consisting of structural units derived from unsaturated dibasic acid, structural units derived from an unsaturated dibasic acid monoester, structural units derived from a halogenated alkyl vinyl compound, structural units derived from a compound represented by Formula (1), structural units derived from a compound represented by Formula (2), and structural units derived from a compound represented by Formula (3):

[Chem. 1]

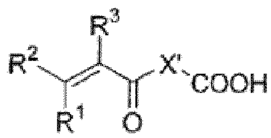

· · · (1)

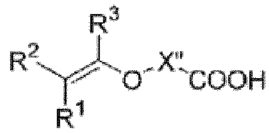

· · · (2)

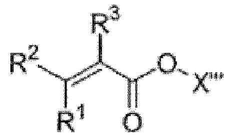

· · · (3)

where $R^1$, $R^2$, and $R^3$ are each independently a hydrogen atom, a fluorine atom, a chlorine atom, or an alkyl group having from 1 to 5 carbons,
in Formula (1), X' is an atomic group having a main chain formed from 1 to 19 atoms and having a molecular weight of 472 or less,
in Formula (2), X" is an atomic group having a main chain formed from 1 to 19 atoms and having a molecular weight of 484 or less, and
in Formula (3), X‴ is hydrogen or a hydrocarbon moiety having at least one hydroxyl group and having from 1 to 5 carbons.

8. An electrode mixture comprising the composition for an electrode mixture described in any one of claims 1 to 7 and an active material.

9. An electrode comprising an electrode mixture layer formed from the electrode mixture described in claim 8 on a current collector.

**10.** A non-aqueous electrolyte secondary battery comprising the electrode described in claim 9.

**11.** A method for producing an electrode comprising:

applying the electrode mixture described in claim 8 on a current collector, and
heat-drying the current collector after the applying step at a temperature of 80°C or higher.

**12.** A method for producing an electrode comprising:

applying the electrode mixture described in claim 8 on a current collector,
drying the current collector after the applying step under heating at a temperature of 110°C or lower, and
heat-treating the current collector after the drying at a temperature that is higher than the temperature of the drying and that is 110°C or higher.

## INTERNATIONAL SEARCH REPORT

International application No.
PCT/JP2020/011957

A. CLASSIFICATION OF SUBJECT MATTER
Int.Cl. C08K5/29(2006.01)i, C08L27/16(2006.01)i, H01M4/13(2010.01)i, H01M4/139(2010.01)i, H01M4/62(2006.01)i
FI: H01M4/62Z, H01M4/13, H01M4/139, C08L27/16, C08K5/29
According to International Patent Classification (IPC) or to both national classification and IPC

B. FIELDS SEARCHED
Minimum documentation searched (classification system followed by classification symbols)
Int.Cl. C08K5/29, C08L27/16, H01M4/13, H01M4/139, H01M4/62

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2000-251897 A (CENTRAL GLASS CO., LTD.) 14.09.2000 (2000-09-14), claims, example 3, table 1 | 1-5, 7-11<br>12 |
| Y | JP 2007-265890 A (DAI NIPPON PRINTING CO., LTD.) 11.10.2007 (2007-10-11), claims, example 3, paragraphs [0023], [0045] | 12 |
| A | JP 07-201315 A (SONY CORPORATION) 04.08.1995 (1995-08-04), claims | 1-12 |
| A | JP 2017-510044 A (PPG INDUSTRIES OHIO, INC.) 06.04.2017 (2017-04-06), claims, paragraphs [0023], [0024] | 1-12 |
| A | JP 2017-513198 A (PPG INDUSTRIES OHIO, INC.) 25.05.2017 (2017-05-25), claims, paragraphs [0024], [0025] | 1-12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>01.06.2020 | Date of mailing of the international search report<br>09.06.2020 |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

International application No.
PCT/JP2020/011957

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-012820 A (NIPPON YUSHI BASF COATINGS KK) 15.01.2002 (2002-01-15), paragraph [0045] | 1-12 |
| A | WO 2010/143667 A1 (ASAHI KASEI E MATERIALS CORPORATION) 16.12.2010 (2010-12-16), paragraph [0115] | 1-12 |

Form PCT/ISA/210 (second sheet) (January 2015)

**INTERNATIONAL SEARCH REPORT**
Information on patent family members

International application No.
PCT/JP2020/011957

| | | |
|---|---|---|
| JP 2000-251897 A | 14.09.2000 | (Family: none) |
| JP 2007-265890 A | 11.10.2007 | (Family: none) |
| JP 07-201315 A | 04.08.1995 | (Family: none) |
| JP 2017-510044 A | 06.04.2017 | US 2015/0280238 A1<br>claims,<br>paragraphs [0037], [0038]<br>WO 2015/153583 A1 |
| JP 2017-513198 A | 25.05.2017 | US 2015/0280239 A1<br>claims,<br>paragraphs [0040], [0041]<br>WO 2015/153558 A1 |
| JP 2002-012820 A | 15.01.2002 | (Family: none) |
| WO 2010/143667 A1 | 16.12.2010 | CN 102449070 A<br>KR 10-2012-0018782 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017510044 A
- JP 2001019896 A
- JP 6172452 A
- JP 2010525124 T
- JP 11195419 A